# EUROPEAN PATENT SPECIFICATION

(11) **EP 3 481 587 B1**
(45) Date of publication and mention of the grant of the patent: **01.09.2021**
(21) Application number: 16739082.2
(22) Date of filing: 11.07.2016
(51) Int. Cl.: B23Q 1/01, B21C 1/02, D07B 7/02

(54) **MACHINE FOR PROCESSING STEEL WIRE WITH A FRAME IN STEEL PLATE HAVING SLOT AND TONGUE CONNECTIONS**
MASCHINE ZUR VERARBEITUNG VON STAHLDRAHT MIT EINEM RAHMEN IN EINER STAHLPLATTE MIT SCHLITZ- UND ZUNGENVERBINDUNGEN
MACHINE POUR TRAITER UN FIL D'ACIER MUNIE D'UN BÂTI EN PLAQUE D'ACIER AYANT DES LIAISONS À FENTE ET À LANGUETTE

(43) Date of publication of application: 15.05.2019
(73) Proprietor: NV Bekaert SA, 8550 Zwevegem (BE)
(72) Inventor: KUIJKEN, Valentijn, 8700 Kanegem (Tielt) (BE); VAN HOECKE, Hendrik, 8400 Oostende (BE)
(74) Representative: Seynhaeve, Geert Filiep
(86) International application number: PCT/EP2016/066387
(87) International publication number: WO 2018/010759

(56) References cited:
- EP-A1- 1 854 577
- CN-B- 102 240 685
- CN-U- 203 635 646
- CN-U- 204 448 859
- CN-Y- 201 249 200
- DE-A1- 4 415 305
- JP-A- H11 311 220

## Description

### Technical Field

The invention relates to machines for processing steel wire. The machine for processing steel wire is built on a frame made of steel plates that are connected with slot and tongue connections. The invention equally well applies to bunching machines, stranding or cabling machines, take-up units, pay-off stands or wet wire drawing machines incorporating the disclosed machine frames all intended for processing steel wire.

### Background Art

In the manufacturing of steel cord typical processing machines are wet wire drawing benches for the drawing of steel wires with a final diameter of less than about 0.8 mm, bunching, stranding or cabling machines for assembling steel wires into strands or cord. Such steel wires and steel cords are typically used for the reinforcement of elastomer products such as tires, hoses, belts and the like. A typical steel cord plant will easily house hundreds to thousands of these machines.

Historically machines for processing steel wire are built on a base body made of cast steel. The base body provides the strength to the machine and allows the sturdy mounting of various machine parts to that base body. At specific places on the body, the body is precision machined and provided with threaded holes for mounting machine parts to it. Due to its mass - that easily surpass 800 kilograms - the base body helps to stabilise the machine against vibrations. The base body is the foundation of the machine.

The reason why machines for processing steel wires are so heavy and sturdy as opposed to for example textile machinery is that the masses and forces involved are high. Indeed, there remains a large difference in stiffness - be it axial, bending or torsional stiffness - and linear mass of a steel wire compared to that of a yarn that generally stretches, bends or torques easily while being extremely light. The processing of steel wire is much more demanding to the overall stiffness and rigidity of the machine than the processing of textile yarns. For example the spools that are used in steel wire industry have a mass exceeding 20 kg. This is in contrast with textile machinery wherein full spools generally have a mass of less than 20 kg. In this respect textile machinery - for example for twisting yarns together - is totally unsuitable to process steel filaments. If filaments of steel and textile yarns would be interchangeable there would not exist dedicated manufacturers of steel wire processing machines.

The manufacturing of cast steel base bodies is however expensive as a specific mould has to be designed. Hence a lot of machines must be produced in order to write off the cost of the mould. After steel casting the base body must be machined to precision which are expensive operations. Redesign of a cast steel base body immediately implies a new mould which makes even a small change an expensive endeavour.

Also the mass of the base body is in many cases over dimensioned as over time more precisely balanced rotating parts and outlining procedures have become available reducing the overall vibration of the machine.

Finally, the casting of the base body takes more time than desired leading to increased delivery times.

Alternative solutions can be found in CN204448859U that describes a frame for carrying a dry drawing bench for drawing steel wire. It appears the frame is assembled out of hot rolled steel plates welded to rectangular beams.

DE 44 15 305 A1 describes a method for manufacturing a frame for a metal working machine wherein plates are precision cut by means of a laser cutter. The plates can be provided with slot and tongue connections that are spot welded to one another.

The inventors therefore come up with an alternative design for machines such as a pay-off stand, take-up unit, cabling, bunching or wet wire drawing machine for processing steel wires.

### Disclosure of Invention

The main object of the invention is therefore to provide a machine for processing steel wire that replaces the known machines with cast steel bodies without giving in on performance and quality. The proposed machine for processing steel wire is lighter and less costly. The assembly time is drastically reduced. Furthermore the design is much more flexible as the need for a casting mould is eliminated.

According a first aspect of the invention a 'machine for processing steel wire' or restrictively a 'steel wire processing machine' is provided. The machine for processing steel wire comprises a frame to which all ancillary parts are bolted, welded or attached in one or another way. The frame is the foundation of the machine in that it carries all mass attached to it.

Within the context of this application the term 'steel wire' should be interpreted broadly in the meaning of a long and slender, elongated steel element. The steel wire can be a steel filament, a strand of steel filaments twisted or not twisted together, a cord assembled out of steel strands, or any other assembly of steel filaments. The steel wire may have a diameter between 0.10 mm up to about 2.0 mm or at the most 3.0 mm. Processing of even thicker steel wires will require cast steel body frames.

Characteristic about the machine for processing steel wire is that the machine frame comprises two or more steel sheets. Usually a number of steel sheets will be needed to build the machine frame for example five to twenty sheets but rarely more than fifty. The steel sheets are bent in a shape to give the frame the stiffness and strength required for processing steel wire. The shape is designed based on the forces that act on the machine. The steel sheets can be provided with holes and through holes in order to attach other parts of the machine to it or to provide access holes for supplies of water, compressed air, cooling air, electricity and the like.

Other parts that are attached to the machine frame are for example:
(1) Bearings: in the case of a bunching or cabling machines the bearings are an important part and must be well aligned. The bearings carry the cradle on which the heavy wire spools are mounted;
(2) Ancillary equipment: for example standards bolted to the machine frame for holding an electrical cabinet or a diverting wheel or a drive motor;
(3) Steel wire handling gear in the form of pull-through capstans - as in a wet wire drawing machine, a cabling or bunching machine - false twisters, straightener blocks, wire guides, flyers and the like;
(4) Spool holders such as pintles, take-up shafts or lifts;
(5) Drive trains: an assembly of axes, pulleys, belts, gears or equivalent that are attached to the machine frame in one or another way for providing motive force to the machine parts.

Specific about the machine frame is that the steel sheets are connected, assembled, held together by slot and tongue connections. The rim of one steel sheet of the two or more steel sheets is provided with protrusions cut out of the one steel sheet that are called 'a tongue' or 'tongues' or 'the tongue'. The tongues are therefore integral and united i.e. form one part with the one steel sheet. Preferably, the tongues are in the plane of the one steel sheet i.e. are not bend out of the plane of the one steel sheet. The slots are elongated holes of substantial rectangular shape that are made in the plane of the other steel sheet. As the tongue is situated at the rim and in the plane of the first sheet and the slot in the plane of a second sheet, the first and second sheet necessarily connect perpendicular to one another where they meet.

A limited number of other connections between sheets maybe needed for example by fastening means such as bolts and nuts or screws or by means of welding, brazing or soldering. Alternatively, the inventors have designed machine frames wherein all steel sheets are connected with a tongue in slot connections without any other fastening means.

At assembly the tongue is inserted into the slot. The tongue may protrude through the slot and extend out of the sheet side opposite to the insertion side. The tongue may be trimmed such that it ends flush or ends just below flush to the side opposite to the insertion side. In order to secure the connection the tongue is welded to the slot and this welding is performed by a weld seam between the tongue and the slot from the side opposite to the insertion side.

In another preferred embodiment the slot and tongue connections are provided in pairs. The first member of the pair has a first slot and a first tongue, the second member of the pair has a second slot and a second tongue. Both first and second slot are in the one sheet, preferably in a same plane part of the sheet. Both first and second tongue are in the other sheet, preferably at the same rim. The first and second slot are perpendicularly or substantially perpendicularly oriented relative to one another ('substantially' meaning within +/- 10° of perpendicularity). It follows that the sheet with the tongues is bent over a right angle between the two tongues. By organising the slot and tongue pairs in this way the sheet comprising the tongues is blocked in the two perpendicular directions relative to the sheet comprising the slots. This enhances the stiffness of the machine frame.

An alternative to that is that the slot and tongue connections are in pairs, the first member of said pair having a first slot and tongue, the second member of said pair having a second slot and tongue. The first slot and the second tongue is provided in the one steel sheet, while the second slot and the first tongue are provided in the other sheet.

The combination of both pair types within one single machine frame is of course also possible. These kind of pairwise slot and tongue connections give the frame the large stiffness that is required in machines for processing steel wire.

In a further preferred embodiment the machine frame may comprise a base section and a machine section wherein said machine section is attached to said base section by means of slot and tongue connections. The base section forms a stiff, horizontal platform of a substantially rectangular form on which the machine section is built. In the sheet of the base section slots are provided for receiving tongues of the machine section.

In a favoured embodiment the base section is provided with two or more reinforcement beams that traverse the base section. Preferably the reinforcement beams traverse the base section in a direction perpendicular to the longest length side of the base section through holes provided at the longest sides of the base section. Preferably the reinforcement beams are positioned parallel to one another with a distance corresponding to the distance of the forks of a fork lift. The reinforcement beams are large enough to receive a single fork. The centre of gravity of the machine is preferably situated between the beams of the base section. In this way the machine can be easily lifted and transported by means of a fork lift. The beams can also be used to semi-permanently fix the machine by sliding mounting bars through it that are secured to the factory floor by means of anchoring bolts.

The steel sheets envisioned for the machine frame may have a thickness between 2 to 20 mm. Sheets with different thicknesses can be used in a single machine frame depending on the forces that act on it. Weight can be saved by using thinner steel sheet for parts that are less loaded or are for cover purposes only. Thicker steel sheet is best reserved for bearing parts or lower positioned parts (in order to lower the centre of gravity). Possibly the steel sheets are all thinner than 18 mm, 15 mm, 12 mm, or 10 mm. Thicker sheet is more difficult to bend but of course provides more stiffness. The steel sheets are preferably thicker than 2, 4, or 6 mm. It has been found the 8 mm is a good balance between required stiffness for all steel sheets in the machine frame. The twelve ranges delimited by the combination of any one of the mentioned lower bounds (2, 4 or 6 mm) with any one of the upper bounds (10, 12, 15, or 18 mm) is explicitly disclosed.

The steel of the sheets used are steel grades typically used for machinery. Such as high tensile steel grades S690QL, S355JR, S960QL, Q355A, A514 Grade F, A514 Grade P, A517 Grade F according EN 10025-6. Alternatively the sheets can be made of carbon steel plate such as steel grades: S235JR, Q235A, A283 Grade C, A36, St37-2, A537 Grade 70, Q345, SS400, SM400A according EN 10025. Also stainless steels such as X5CrNi18.9, Werkstofnummer 1.4301, X5CrNiMo18.10, Werkstofnummer 1.4401, X2CrNiMo18.10, Werkstofnummer 1.4404 can be used. Steel grades that allow for easy welding and can be cut by laser are preferred.

The steel sheets are preferably cut by laser. This is most convenient as modern automated laser cutters allow to cut intricate patterns fast and with high precision. To cut the slot and tongue in the steel sheet a precision of better than 0.5 mm or even better than 0.3 mm such as 0.1 mm is advised. Cutting in the vicinity of slot and tongue may therefore necessitate a slower cutting. The tongue must not play more than 3 mm and preferably less than 0.5 mm or even less than 0.4 mm when inserted into the slot in the direction perpendicular to or along the length of the slot.

The machine for processing steel wire have a total mass between 100 kg and up to about 7.5 metric tons, for example between 200 kg and 3000 kg, or between 500 and 2500 kg. The inventive machine frame has a much lower mass than cast steel frames of comparable machines. The inventive machine frame has a mass that is at least a fifth or even less than half of the mass of an equivalent machine frame made of cast steel. This results in a huge saving in materials costs and carbon emission due to better use of steel and less mass to be transported. Furthermore these machines are easier to deploy or move, making the relocation of the machine within a plant and between plants easier.

The machine for processing steel wire can be in the form of a bunching machine. The bunching machine has a base section and a machine section that are attached to one another by means of slot and tongue connections as described before. The machine section of the machine frame comprises a cradle house, a pull-through unit and a take-up table all made of bent steel sheet that are connected to the base section and to one another by means of slot and tongue connections.

The cradle house, intended for receiving a wire pay-off and cable forming cradle, is assembled out of bent steel sheets held to steel sheet supports. The cradle housing is made of 8 mm thick sheet steel in order to be able to hold parts that by accident would eject from the cradle. The steel sheet supports connect to the base section. All connections of the sheets of the cradle house are by means of slot and tongue. The cradle house is further provided with the necessary holes for receiving the bearings carrying the cradle of the bunching machine. By precisely cutting the slot and tongue connections according the described tolerances, very little aligning is needed for the bearings.

The machine section of the frame is further provided with a steel sheet on which the pull-through unit is to be mounted. This steel sheet connects to the base section, to the cradle housing and to the take-up table by means of slot and tongue connections.

The machine section of the frame is completed with steel sheets forming the take-up table to which a take up unit is to be mounted. Again all sheets connect by means of slot and tongue connections.

A similar arrangement can be used for making a cabling machine, which is a machine for processing steel wire. In a cabling machine the bunching cradle is replaced with tubes carrying different cradles organised in a row.

Cabling or bunching machines usually comprise a wire pay-off stand or a wire take-up frame. The same design principle of using bent steel sheets connected with slot and tongue connections can equally well be applied to these ancillary apparatus for processing steel wire in standalone versions.

By replacing the cradle housing with a lubricant container, the same design principles can be used to make a wet wire drawing machine. On top of the container a drive train with pull through capstans is to be mounted.

### Brief Description of Figures in the Drawings

Figure 1a shows a slot and tongue connection in perspective towards the insertion side before mounting;
Figure 1b shows the slot and tongue connected and welded together in a perspective view from opposite to the insertion side.
Figure 2 shows a bunching machine frame made of several steel sheets all connected through tongue and slot connections.
Figure 3 shows another form of slot and tongue connections.

### Mode(s) for Carrying Out the Invention

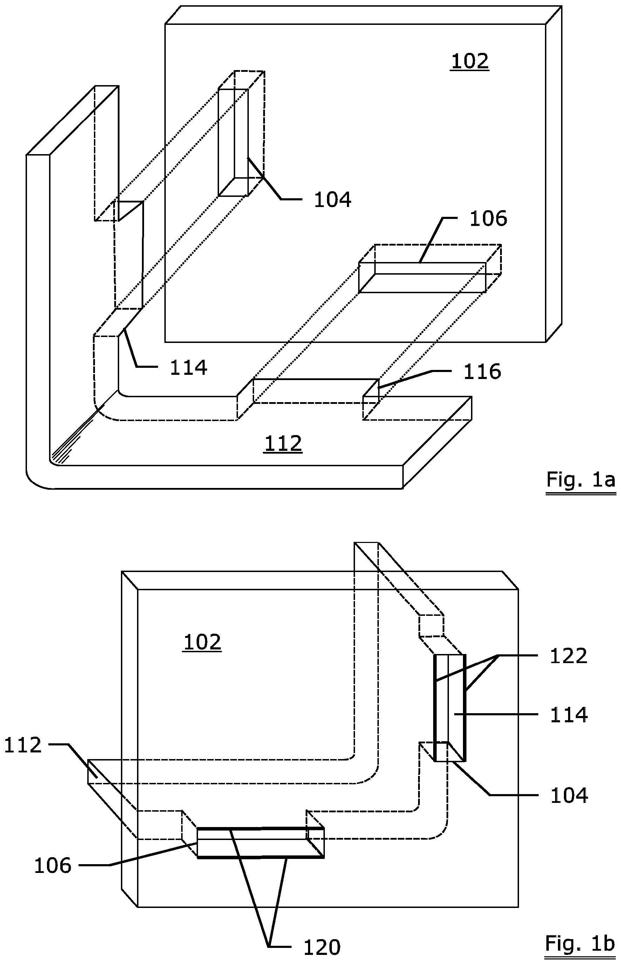

Figures 1a and 1b show the general principle of a slot and tongue connection. Although such slot and tongue connections are known, they have never been used for making machines for processing steel wires. Such connections are also new for making machines for processing steel wire such as bunching machines, cabling machines or wet wire drawing machines, pay-off stands or take-up units. These are machines that are used to make steel cord or steel wire and the strength requirements of the frame are specifically designed to that field of use.

Figure 1a shows to steel sheets 102 and 112 prior to assembly. Steel sheet 102 is provided with two slots 104,106 of an elongated shape. Steel sheet 112 is bent over a right angle and each part has a tongue: 114 and 116 that is integral to the sheet. By orienting the slots 104 and 106 in a direction perpendicular to one another a very stiff connection can be obtained. Both the slots 104 and 106 are precision cut by means of a laser. Also the tongues 114 and 116 are laser cut from the rim of the steel sheet 112. The slot and tongue connections precisely match and the tongue (114, 116) is slid into the slot (104, 106).

Figure 1b shows the same parts of Figure 1a after assembly and welding but now in a perspective view from the side opposite to the insertion side. The tongues 114 and 116 are cut flush or ground so that they do not protrude from the face of sheet 102. Slot and tongue are connected by means of weld forming a seam 120 and 122. It suffices that only the elongated sides are provided with a weld seam as due to the orthogonal arrangement of the slots, both parts cannot move relative to one another.

In the connection of Figures 1a and 1b the slot and tongue connections are in pairs, the first member of the pair having a first tongue 114 and first slot 104 and the second member of the pair having a second tongue 116 and second slot 106 wherein the first and second tongue 114, 116 are at the rim of the one steel sheet, and the first and second slot 104, 106 are in the plane of the other steel sheet.

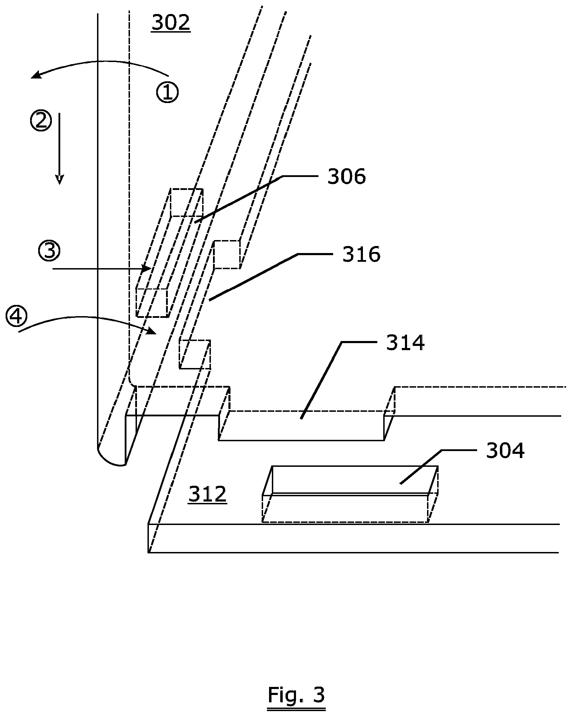

Figure 3 shows an alternative pair of connections wherein the first member of the pair has a first tongue 314 and a first slot 304 and the second member of the pair has a second tongue 316 and a second slot 306 and wherein the first slot 314 and the second tongue 316 are provided on the one steel sheet 312 while the second slot 306 and the first tongue 314 are provided on the other sheet 302.

The mounting of the two steel sheets can be performed in a specific order indicated by the numbered arrows in Figure 3:
(1) First the other steel sheet 302 is reclined;
(2) Then the steel sheet 302 is lowered so as to land on the one steel sheet 312;
(3) The other steel sheet 302 is translated such that the first member of the pair of slot and tongue connections 306, 316 engage;
(4) Then the other steel sheet 302 is inclined such that the second pair of slot and tongue connections 314, 304 engages.
In this way a very stiff and sturdy connection can be made between the one and the other steel sheet.

Note that the pairs of different connections as per Figure 1a, 1b and as per Figure 3 can be mixed within one single machine frame.

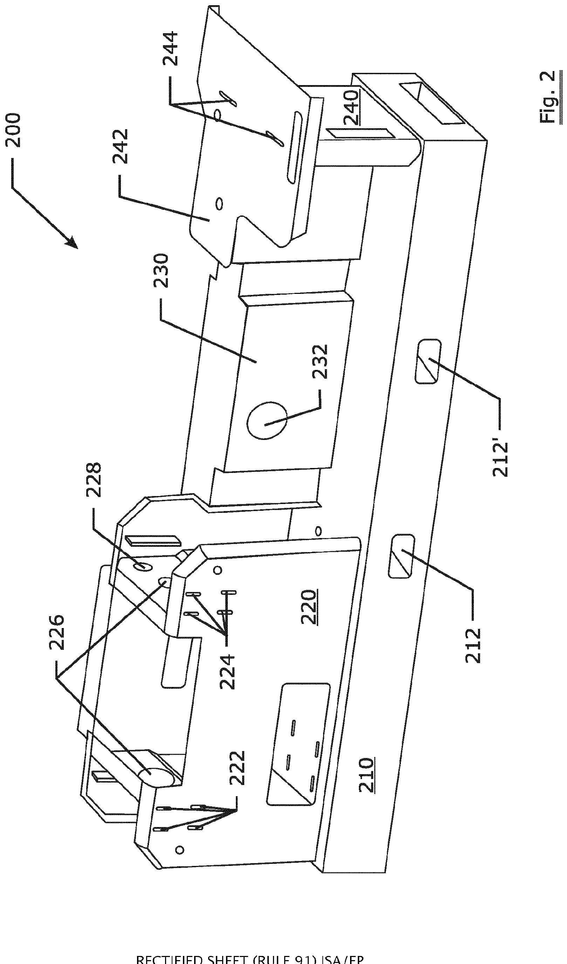

These types of connection systems are ubiquitously used in the bunching machine depicted in Figure 2. Figure 2 shows in perspective view a machine frame 200 of a bunching machine that is a machine for processing steel wire. The machine frame has a base section 210 that comprises two traverse beams 212 and 212' that are suitable for transportation of the machine and for anchoring the machine.

The machine frame has a cradle house 220 that is assembled out of steel sheets that are connected by means of slot and tongue connections 222 and 224. Holes 226 for receiving the cradle bearings are provided. Also supply through holes like 228 are foreseen. The cradle house 220 also is connected with slot and tongue connections to the base section 210 of the machine frame.

The cradle house 220 is connected to the pull-through unit 230 that is provided with a hole 232 intended for receiving the pull-through capstan. The pull-through unit 230 is further connected to the base section 210 and the take-up table 240. The take-up table 240 is provided with a table steel sheet 242 to which the guide wheels and drive unit will be mounted. Again the connections between the different steel sheets are with slot and tongue connections 244.

The machine frame of the bunching machine as described in Figure 2 has a mass of 760 kg. A machine of equivalent size but based on a cast steel frame has a mass of 1700 kg. This is less than half of the mass of the conventional machine frame.

Although the detailed embodiment is on a bunching machine, the basic design principles of using steel sheets that are connected with slot and tongue connection can easily be extended by the skilled person to cabling machines, pay-off stands, take-up units or wet wire drawing machines.

## Claims

1. Machine for processing steel wire, said machine comprising a frame (200), said frame (200) comprises two or more steel sheets (102, 112, 302, 312), said two or more steel sheets being connected to one another by slot (104, 106, 304, 306) and tongue connections (114, 116, 314, 316)
**characterized in that**
said slot and tongue connections are fixed by means of a weld seam (120, 122), wherein said weld seam is on the side of a steel sheet opposite the insertion side of said tongue.

2. The machine for processing steel wire according to claim 1 wherein said tongue (114, 116) is trimmed such that it ends flush or ends just below flush to the sheet side opposite of the insertion side of said tongue.

3. The machine for processing steel wire according to any one of claims 1 to 2, wherein the rim of one steel sheet (112, 302, 312) of said two or more steel sheets is provided with one or more tongues (114, 116, 314, 316) in the plane of said one steel sheet and wherein one other steel sheet (102, 312, 302) of said two or more steel sheets is provided with elongated slots (104, 106, 304, 306) made in the plane of said second steel sheet.

4. The machine for processing steel wire according to any one of claims 1 to 3 wherein some (112, 302) of said two or more steel sheets have a bent.

5. The machine for processing steel wire according to any one of claims 1 to 4 wherein said slot and tongue connections are in pairs (104,114;106,116), the first member of said pair having a first slot (104) and first tongue (114), the second member of said pair having a second slot (106) and second tongue (116), the first slot being perpendicular to the second slot, said first and second slot being in the one sheet (102), said first and second tongue being on the other sheet (112).

6. The machine for processing steel wire according to any one of claims 1 to 4 wherein said slot and tongue connections are in pairs (306,316;304,314), the first member of said pair having first slot (306) and first tongue (316), said second member of said pair having a second slot (304) and second tongue (314) and wherein the first slot (306) and the second tongue (314) are provided on the one steel sheet (312) while the second slot (304) and the first tongue (316) are provided on the other sheet (302).

7. The machine for processing steel wire wherein said two or more steel sheets are connected to one another by means of slot and tongue connections in pairs according to a combination of claims 5 and 6.

8. The machine for processing steel wire according to any one of claims 1 to 7, wherein said frame (200) comprises a base section (210) and a machine section (220, 230, 240), said machine section (220, 230, 240) being attached to said base section with slot and tongue connections.

9. The machine for processing steel wire according to claim 8 wherein the base section (210) is provided with reinforcement beams (212, 212') spanning the base section, said reinforcement beams being positioned for receiving the forks of a fork lift.

10. The machine for processing steel wire according to any one of claims 1 to 9 wherein said two or more steel sheets (102, 112, 302, 312) have a thickness between 2 and 20 mm.

11. The machine for processing steel wire according to claim 10 wherein any one of said steel sheets (102, 112, 302, 312) is made of high tensile steel, high carbon steel or stainless steel.

12. The machine for processing steel wire according to any one of claims 10 to 11 wherein any one of said steel sheets (102, 112, 302, 312) is of any one steel type out of the group consisting of S690QL, S355JR, S960QL, Q355A, A514 Grade F, A514 Grade P, A517 Grade F, S235JR, Q235A, A283 Grade C, A36, St37-2, A537 Grade 70, Q345, SS400, SM400A, X5CrNi18.9, X5CrNiMo18.10, and X2CrNiMo18.10.

13. The machine for processing steel wire according to any one of claims 1 to 12 wherein said slot and tongue connections (104,114;116,106), are laser cut to a precision of better than 0.5 mm.

14. A machine for processing steel wire according to any one of claims 1 to 13 that is a bunching machine.

15. A machine for processing steel wire according to any one of claims 1 to 13 that is a cabling machine.

16. A machine for processing steel wire according to any one of claims 1 to 13 that is a pay-off stand.

17. A machine for processing steel wire according to any one of claims 1 to 13 that is a take-up unit.

18. A machine for processing steel wire according to any one of claims 1 to 13 that is a wet wire drawing machine.

19. A machine for processing steel wire according any one of the claims 1 to 18 with a mass between 100 kg and 7.5 metric tons.

## Patentansprüche

1. Maschine zur Verarbeitung von Stahldraht, wobei die Maschine einen Rahmen (200) umfasst, wobei der Rahmen (200) zwei oder mehr Stahlbleche (102, 112, 302, 312) umfasst, wobei die zwei oder mehr Stahlbleche durch Schlitz- (104, 106, 304, 306) und Zungenverbindungen (114, 116, 314, 316) miteinander verbunden sind,
**dadurch gekennzeichnet, dass**
die Schlitz- und Zungenverbindungen mittels einer Schweißnaht (120, 122) fixiert sind, wobei die Schweißnaht auf einer Seite eines Stahlblechs gegenüber der Einführungsseite der Zunge ist.

2. Maschine zur Verarbeitung von Stahldraht nach Anspruch 1, wobei die Zunge (114, 116) so geschnitten ist, dass sie bündig oder gerade unterhalb von bündig mit der Blechseite gegenüber der Einführungsseite der Zunge endet.

3. Maschine zur Verarbeitung von Stahldraht nach einem der Ansprüche 1 bis 2, wobei der Rand eines Stahlblechs (112, 302, 312) der zwei oder mehreren Stahlbleche mit einer oder mehreren Zungen (114, 116, 314, 316) in der Ebene des einen Stahlblechs versehen ist und wobei ein anderes Stahlblech (102, 312, 302) der zwei oder mehreren Stahlbleche mit länglichen Schlitzen (104, 106, 304, 306) versehen ist, die in der Ebene des zweiten Stahlblechs angefertigt sind.

4. Maschine zur Verarbeitung von Stahldraht nach einem der Ansprüche 1 bis 3, wobei einige (112, 302) der zwei oder mehr Stahlbleche eine Biegung aufweisen.

5. Maschine zur Verarbeitung von Stahldraht nach einem der Ansprüche 1 bis 4, wobei die Schlitz- und Zungenverbindungen in Paaren (104, 114; 106, 116) sind, wobei das erste Element des Paares einen ersten Schlitz (104) und eine erste Zunge (114) aufweist, wobei das zweite Element des Paares einen zweiten Schlitz (106) und eine zweite Zunge (116) aufweist, wobei der erste Schlitz senkrecht zum zweiten Schlitz ist, wobei der erste und der zweite Schlitz in dem einen Blech (102) sind, wobei die erste und die zweite Zunge in dem anderen Blech (112) sind.

6. Maschine zur Verarbeitung von Stahldraht nach einem der Ansprüche 1 bis 4, wobei die Schlitz- und Zungenverbindungen in Paaren (306, 316; 304, 314) sind, wobei das erste Element des Paares einen ersten Schlitz (306) und eine erste Zunge (316) aufweist, wobei das zweite Element des Paares einen zweiten Schlitz (304) und eine zweite Zunge (314) aufweist, und wobei der erste Schlitz (306) und die zweite Zunge (314) an dem einen Stahlblech (312) bereitgestellt sind, während der zweite Schlitz (304) und die erste Zunge (316) an dem anderen Blech (302) bereitgestellt sind.

7. Maschine zur Verarbeitung von Stahldraht, wobei die zwei oder mehreren Stahlbleche mittels Schlitz- und Zungenverbindungen in Paaren entsprechend einer Kombination der Ansprüche 5 und 6 miteinander verbunden sind.

8. Maschine zur Verarbeitung von Stahldraht nach einem der Ansprüche 1 bis 7, wobei der Rahmen (200) einen Basisabschnitt (210) und einen Maschinenabschnitt (220, 230, 240) umfasst, wobei der Maschinenabschnitt (220, 230, 240) mit Schlitz- und Zungenverbindungen am Basisabschnitt befestigt ist.

9. Maschine zur Verarbeitung von Stahldraht nach Anspruch 8, wobei der Basisabschnitt (210) mit Verstärkungsträgern (212, 212') versehen ist, die den Basisabschnitt überspannen, wobei die Verstärkungsträger positioniert sind, um die Gabel eines Gabelhubwagens aufzunehmen.

10. Maschine zur Verarbeitung von Stahldraht nach einem der Ansprüche 1 bis 9, wobei die zwei oder mehreren Stahlbleche (102, 112, 302, 312) eine Dicke zwischen 2 und 20 mm aufweisen.

11. Maschine zur Verarbeitung von Stahldraht nach Anspruch 10, wobei eines der Stahlbleche (102, 112, 302, 312) aus hochzugfestem Stahl, Kohlenstoffstahl oder Edelstahl gefertigt ist.

12. Maschine zur Verarbeitung von Stahldraht nach einem der Ansprüche 10 bis 11, wobei jedes der Stahlbleche (102, 112, 302, 312) aus einer beliebigen Stahlsorte aus der Gruppe ist, die besteht aus S690QL, S355JR, S960QL, Q355A, A514 Grade F, A514 Grade P, A517 Grade F, S235JR, Q235A, A283 Grade C, A36, St37-2, A537 Grade 70, Q345, SS400, SM400A, X5CrNi18.9, X5CrNiMo18.10 und X2CrNiMo18.10.

13. Maschine zur Verarbeitung von Stahldraht nach einem der Ansprüche 1 bis 12, wobei die Schlitz- und Zungenverbindungen (104, 114; 116, 106) auf eine Genauigkeit von besser als 0,5 mm lasergeschnitten sind.

14. Maschine zur Verarbeitung von Stahldraht nach einem der Ansprüche 1 bis 13, die eine Verlitzmaschine ist.

15. Maschine zur Verarbeitung von Stahldraht nach einem der Ansprüche 1 bis 13, die eine Kabliermaschine ist.

16. Maschine zur Verarbeitung von Stahldraht nach einem der Ansprüche 1 bis 13, die ein Einlaufgestell ist.

17. Maschine zur Verarbeitung von Stahldraht nach einem der Ansprüche 1 bis 13, die eine Aufnahmeeinrichtung ist.

18. Maschine zur Verarbeitung von Stahldraht nach einem der Ansprüche 1 bis 13, die eine Nassdrahtziehmaschine ist.

19. Maschine zur Verarbeitung von Stahldraht nach einem der Ansprüche 1 bis 18 mit einer Masse zwischen 100 kg und 7,5 metrischen Tonnen.

## Revendications

1. Machine pour traiter un fil d'acier, ladite machine comprenant un bâti (200), ledit bâti (200) comprenant deux ou plus de deux tôles d'acier (102, 112, 302, 312), lesdites deux ou plus de deux tôles d'acier étant reliées les unes aux autres par des liaisons à fente (104, 106, 304, 306) et à languette (114, 116, 314, 316)
**caractérisé en ce que**
lesdites liaisons à fente et à languette sont fixées au moyen d'un cordon de soudure (120, 122), ledit cordon de soudure étant sur le côté d'une tôle d'acier opposé au côté d'insertion de ladite languette.

2. Machine pour traiter un fil d'acier selon la revendication 1, ladite languette (114, 116) étant rognée de telle sorte qu'elle se termine au niveau ou juste en dessous du niveau du côté de la tôle opposé au côté d'insertion de ladite languette.

3. Machine pour traiter un fil d'acier selon l'une quelconque des revendications 1 à 2, le rebord d'une première tôle d'acier (112, 302, 312) parmi lesdites deux ou plus de deux tôles d'acier étant pourvu d'une ou plusieurs languettes (114, 116, 314, 316) dans le plan de ladite première tôle d'acier, et une autre tôle d'acier (102, 312, 302) parmi lesdites deux ou plus de deux tôles d'acier étant pourvue de fentes allongées (104, 106, 304, 306) réalisées dans le plan de ladite seconde tôle d'acier.

4. Machine pour traiter un fil d'acier selon l'une quelconque des revendications 1 à 3, certaines (112, 302) desdites deux ou plus de deux tôles d'acier ayant une courbure.

5. Machine pour traiter un fil d'acier selon l'une quelconque des revendications 1 à 4, lesdites liaisons à fente et à languette étant par paires (104, 114 ; 106, 116), le premier élément de ladite paire ayant une première fente (104) et une première languette (114), le second élément de ladite paire ayant une seconde fente (106) et une seconde languette (116), la première fente étant perpendiculaire à la seconde fente, lesdites première et seconde fentes étant dans la première tôle (102), lesdites première et seconde languettes étant sur l'autre tôle (112).

6. Machine pour traiter un fil d'acier selon l'une quelconque des revendications 1 à 4, lesdites liaisons à fente et à languette étant par paires (306, 316 ; 304, 314), le premier élément de ladite paire ayant une première fente (306) et une première languette (316), ledit second élément de ladite paire ayant une seconde fente (304) et une seconde languette (314), et la première fente (306) et la seconde languette (314) étant prévues sur la première tôle d'acier (312) tandis que la seconde fente (304) et la première languette (316) sont fournies sur l'autre tôle (302).

7. Machine pour traiter un fil d'acier, lesdites deux ou plus de deux tôles d'acier étant reliées les unes aux autres au moyen de liaisons à fente et à languette par paires selon une combinaison selon les revendications 5 et 6.

8. Machine pour traiter un fil d'acier selon l'une quelconque des revendications 1 à 7, ledit bâti (200) comprenant une section de base (210) et une section de machine (220, 230, 240), ladite section de machine (220, 230, 240) étant fixée à ladite section de base avec des liaisons à fente et à languette.

9. Machine pour traiter un fil d'acier selon la revendication 8, la section de base (210) étant pourvue de poutres de renfort (212, 212') enjambant la section de base, lesdites poutres de renfort étant positionnées pour recevoir les fourches d'un chariot élévateur.

10. Machine pour traiter un fil d'acier selon l'une quelconque des revendications 1 à 9, lesdites deux ou plus de deux tôles d'acier (102, 112, 302, 312) ayant une épaisseur comprise entre 2 et 20 mm.

11. Machine pour traiter un fil d'acier selon la revendication 10, l'une quelconque desdites tôles d'acier (102, 112, 302, 312) étant en acier à haute résistance à la traction, en acier à haute teneur en carbone ou en acier inoxydable.

12. Machine pour traiter un fil d'acier selon l'une quelconque des revendications 10 à 11, l'une quelconque desdites tôles d'acier (102, 112, 302, 312) étant d'un quelconque type d'acier parmi le groupe constitué de S690QL, S355JR, S960QL, Q355A, A514 Grade F, A514 Grade P, A517 Grade F, S235JR, Q235A, A283 Grade C, A36, St37-2, A537 Grade 70, Q345, SS400, SM400A, X5CrNi18.9, X5CrNiMo18.10, et X2CrNiMo18.10.

13. Machine pour traiter un fil d'acier selon l'une quelconque des revendications 1 à 12, lesdites liaisons à fente et à languette (104, 114 ; 116, 106), étant découpées au laser à une précision supérieure à 0,5 mm.

14. Machine pour traiter un fil d'acier selon l'une quelconque des revendications 1 à 13, qui est une machine à toronner.

15. Machine pour traiter un fil d'acier selon l'une quelconque des revendications 1 à 13, qui est une machine de câblage.

16. Machine pour traiter un fil d'acier selon l'une quelconque des revendications 1 à 13, qui est un support de déroulement.

17. Machine pour traiter un fil d'acier selon l'une quelconque des revendications 1 à 13, qui est une unité d'enroulement.

18. Machine pour traiter un fil d'acier selon l'une quelconque des revendications 1 à 13, qui est une machine de tréfilage humide.

19. Machine pour traiter un fil d'acier selon l'une quelconque des revendications 1 à 18 ayant une masse comprise entre 100 kg et 7,5 tonnes métriques.
